Europäisches Patentamt

European Patent Office

Office européen des brevets

(19)

(11) EP 1 422 895 A2

(12) **EUROPEAN PATENT APPLICATION**

(43) Date of publication:
26.05.2004 Bulletin 2004/22

(51) Int Cl.⁷: $H04L\ 25/02$

(21) Application number: 03257247.1

(22) Date of filing: 18.11.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **19.11.2002 GB 0226991**

(71) Applicant: **MATSUSHITA ELECTRIC INDUSTRIAL CO., LTD.**
**Kadoma-shi, Osaka 571-8501 (JP)**

(72) Inventors:
• **Ma, Ming**
**Newbury Berkshire RG14 5LA (GB)**
• **Canpolat, Bahadir**
**Thatcham Berkshire RG19 4YF (GB)**

(74) Representative: **Dawson, Elizabeth Ann et al**
**A.A. Thornton & Co.**
**235 High Holborn**
**London WC1V 7LE (GB)**

(54) **Estimation of channel impulse response with a dynamic number of coefficients**

(57) This document describes a method of estimating channel impulse response (CIR) in a communication system in which a known training sequence is transmitted over the channel. Received symbols are cross-correlated with the training sequence to provide a predetermined number W of possible channel coefficients. A maximum number less than W is then determined to be used in estimating CIR. For various possible sets of coefficients within the W coefficients the mean squared error is calculated between a received signal sequence and a reconstructed sequence using the set of coefficients. The set producing the minimum mean squared error is selected.

EP 1 422 895 A2

**Description**

This present invention relates to a method and apparatus for implementing a channel estimator for a communication system (e.g. mobile) and more particularly to improving channel coefficients estimation quality and time of arrival accuracy with reduced processing requirements by a dynamic tap search minimum mean squared error (MMSE) method.

It is well known that high frequency band (for example GSM 900MHz) radio waves reflect or diffract from buildings, cars, hills, etc. So an antenna receives not only the original signal, but also many copies of the original signal with different carrier phases. The resulting combined signal magnitude will fluctuate dramatically, and this is termed multipath fading. The performance of time division multiple access (TDMA) based mobile communication systems such as GSM/GPRS suffers a significant degradation in the presence of multipath fading channels since the signal received by a GSM handset is always distorted due to multipath fading. The GSM system employs two methods to combat this problem: channel coding and interleaving, and multipath equalisation. The former is used to code the important data bits and the resulting data is interleaved over several bursts. In the case where certain bursts are corrupted, the original data can still be recovered from the surviving signal bursts. Equalisation is used to extract the desired signal from the distorted signal. It works by finding out how a known transmitted signal is modified by multipath fading, and constructing an inverse filter to extract the rest of the desired signal. The known signal is the 26-bit training sequence transmitted in the middle of every normal burst (NB) or 64-bit training sequence for the synchronisation burst (SB). Correlation of the incoming signal burst with this known training sequence will give information on the delay, magnitude and scattering phase of the multipath signal components which determines the so-called channel impulse response (CIR). This channel information is then used to reconstruct the original signal data. The quality of the CIR is of utmost importance as the equaliser performance is dominated by the accuracy of the CIR estimation.

The general algorithm for GSM channel estimation is briefly described as follows:

Suppose the modulated training sequence $s(t)$ is transmitted through the channel with channel impulse response $h(t)$, and is corrupted by noise. In the absence of noise, the received sequence $r(t)$ can be expressed as:

$$r(t) = s(t) * h(t) \tag{1}$$

Where * denotes a convolutional operation. In the receiver side, the received signal is match-filtered by the causal impulse response $h_{MF}(t)$ to derive an estimation of the channel impulse response:

$$h_{est}(t) = r(t) * h_{MF}(t)$$

$$= s(t) * h(t) * h_{MF}(t)$$

$$= f_{acf}(t) * h(t) \tag{2}$$

Where $f_{acf}(t)$ is the auto-correlation function of the training sequence $s(t)$. If $f_{acf}(t)$ is a highly peaked auto-correlation function, then its convolution with $h(t)$ will become:

$$h_{est}(t) \approx h(t) \tag{3}$$

Provided the training sequence has good auto-correlation property, the actual channel impulse response can be estimated based on the above method.

For GSM mobile communication systems, the demodulation of the SB has not received much attention because the SB training sequence (64-bits in length) has a larger correlation peak power and easily allows the demodulation of the SB, whilst of more concern is accurate estimation of the CIR from the NB, which has short training sequence (26-bits in length) and carries the majority of traffic, and is more vulnerable to noise and fading.

Eight Training Sequence Codes (TSC) for the NB defined in the GSM standard are presented below in Table 1. The length of the TSC is 26 bits, which occupies bit locations 61-86 of the NB. Each training sequence has the following characteristics: the first 5 bits of the 26 bits training sequence are the last 5 bits of the training sequence centre 16 bits, the last 5 bits of the training sequence are the first 5 bits of the training sequence centre 16 bits. This special design intends to take the timing uncertainty into account when using the centre 16 bits for correlation and channel estimation without using the 26-bit full length training sequence.

In the accompanying drawings:

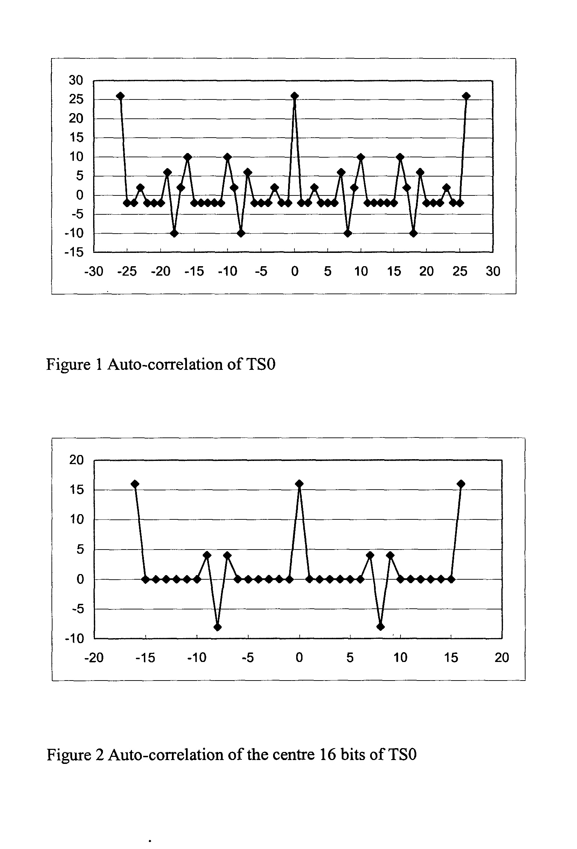

Figure 1 plots the auto-correlation of the 26-bit sequence of the TSCO,
Figure 2 shows the auto-correction of the centre 16 bits of the TSCO, and

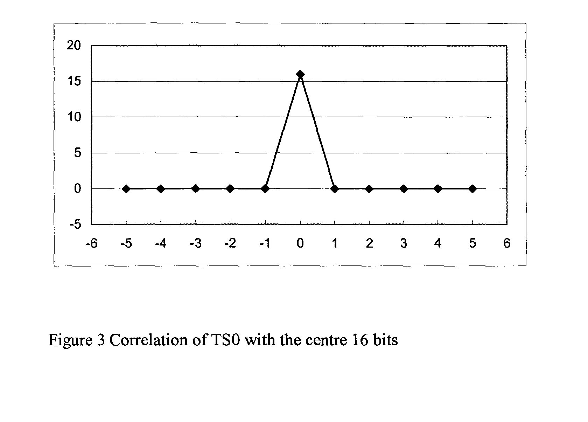

Figure 3 presents the correlation of the 26 bits sequence of TSCO with the centre 16 bits of TSC0.

The data is made bipolar before correlation. The centre 16 bits of the training sequences have the property of the centred peak with 5 zeroes each side surrounding the peak. Thus the structure of the 26 bits training sequence will enable us to use only the centre 16 bits of the training sequence to do correlation and channel estimation.

## Table 1: Training sequence codes for NB

| Training Sequence Code (TSC) | Training sequence bits (BN61, BN62 .. BN86) |
|---|---|
| 0 | (0,0,1,0,0,1,0,1,1,1,0,0,0,0,1,0,0,0,1,0,0,1,0,1,1,1) |
| 1 | (0,0,1,0,1,1,0,1,1,1,0,1,1,1,1,0,0,0,1,0,1,1,0,1,1,1) |
| 2 | (0,1,0,0,0,0,1,1,1,0,1,1,1,0,1,0,0,1,0,0,0,0,1,1,1,0) |
| 3 | (0,1,0,0,0,1,1,1,1,0,1,1,0,1,0,0,0,1,0,0,0,1,1,1,1,0) |
| 4 | (0,0,0,1,1,0,1,0,1,1,1,0,0,1,0,0,0,0,0,1,1,0,1,0,1,1) |
| 5 | (0,1,0,0,1,1,1,0,1,0,1,1,0,0,0,0,0,1,0,0,1,1,1,1,0,1,0) |
| 6 | (1,0,1,0,0,1,1,1,1,1,0,1,1,0,0,0,1,0,1,0,0,1,1,1,1,1) |
| 7 | (1,1,1,0,1,1,1,1,0,0,0,1,0,0,1,0,1,1,1,0,1,1,1,1,0,0) |

The modulation technique chosen by GSM is Gaussian Minimum Shift Keying (GMSK). The GSM GMSK signal will spread over three bits, thus introducing inter-symbol interference by itself, which complicates the channel estimation. However each individual GMSK signal can be approximately decomposed into several delayed MSK signals. For a single path MSK signal with modulation bits stream $d_0, d_1,...d_i...d_n$, the phase change is given by

$$\Delta\varphi(i) = \frac{\pi}{2}\ (2(d_i \oplus d_{i-1})-1) \tag{4}$$

Or

$$\varphi(i)-\varphi(i-1)=\pi(d_i \oplus d_{i-1})-\frac{\pi}{2} \tag{5}$$

Assuming the initial phase is $\varphi_0$, and the initial data $d_0 = 0$, repeating the above operation, one can get

$$\varphi(i) = \pi d_i - i\frac{\pi}{2}+\varphi_0 \tag{6}$$

The $i$-th sample of the single path MSK signal can be written as

$$s(iT) = Aexp(j(\pi d_i \text{-} i\frac{\pi}{2} + \varphi_0))$$ (7)

or

$$s(iT)exp(ji\frac{\pi}{2}) = Aexp(j\varphi_0)sign(d_i)$$

(8)

$$sign(d_i) = \begin{cases} +1, & d_i = 0, \\ -1, & d_i = 1. \end{cases}$$

Where, A is the scattering amplitude of the MSK signal. The above equation indicates that if the MSK $i$-th samples are rotated by $i\frac{\pi}{2}$, the resultant is the initial signal multiplied by the sign of the $i$-th data bit. The correlation of the midamble data with the rotated samples will give $NA\ exp(j\varphi_0)$, where $N$ is the length of the midamble training sequence. This can be generalised to a multipath MSK signal, and the correlation of the rotated sampled signal delayed by $i$ bits with the training sequence gives $NA_i\ exp(j\varphi_i)$. Thus the scattering amplitude and phase information of the multipath MSK signal can be obtained from the above operations.

GSM standards do not impose any performance figures measured on the channel estimator, but recommend global performance requirements measured after correction of the errors by channel decoding. However one important constraint is that the algorithm must be able to cope with two multipaths of equal power received at an interval of up to 16 μs, i.e. almost four bit periods for GSM, and the GMSK itself will introduce inter-symbol interference over several bits.

From the above description, the CIR for GSM channel estimation can be estimated by cross-correlating the received symbols (after phase de-rotation) with the known training sequence. Thus the correlation can be expressed by

$$C(j) = \frac{1}{16}\sum_{i=0}^{15}ts(i+5)r(\tau + i + j + 5 - R), 0 \le j < W,$$ (9)

where $ts(i)$ is a training sequence (26-bits in length), $r(i)$ denotes the received I/Q samples, $W$ denotes the correlation size, $\tau$ is the expected position of the start of the training sequence relative to the received IQ window, which corresponds to the 61st sample, and $R$ denotes the shift size of the search window, the selection of $R$ is related to the initial TOA (time of arrival) accuracy that is assumed to be within $\pm T$ symbols, then $R$ should equal to $T$. In this implementation, $R=3$, the maximum number of coefficients to be used in the channel estimation is 5, so $W=2\times R+5=11$.

This process will provide $W$ possible coefficients or taps which may be applied to the received signal to simulate the channel impulse response and hence correct the received signal to account for imperfections in transmission. The aim of the present invention is to determine which of these $W$ coefficients to use.

According to the present invention a number of taps less than $W$ is predetermined as the maximum number of taps that will be used in the channel estimation. The final decision as to which coefficients are to be used is based on the MMSE method.

The method of the invention is defined in claim 1.

The MMSE method can be extended to also determine the signal time of arrival.

In the preferred embodiment of the inventions, the determination of the number of coefficients to be used is partly based on the magnitude of the correlation values obtained and partly on maximum and minimum values determined from channel operating conditions and/or performance requirements.

An embodiment of the invention will now be described by way of example only.

In the first stage of determining the number of coefficients to be used, we examine what proportion of the $W$ values obtained in equation 9 have energies above a certain threshold. In this embodiment, the threshold energy value is $1/\alpha$ of the maximum energy, $\alpha$ is an integer larger than 1, the selection of $\alpha$ is needed to be optimised by simulation, value 8 gives good performance and convenience for simple implementation by only right shift operation rather than division operation. Therefore, the number of taps/coefficients that are to be considered in the next step of the algorithm is determined as follows:

Let *N* denote the number of taps, having energies above the threshold, i.e. *N* is the size of **X**, where the set **X** is defined by:

$$X = \left\{ 0 \leq j < w : |C(j)|^2 \geq E / \alpha \right\}$$
$$E = max|C(j)|^2, 0 \leq j < W \tag{10}$$

The value *N* determined above is now modified according to the following rules to produce a coefficient number $N_{cir}$ that will be taken into account in the next part of the procedure:

$$N_{cir} = \begin{cases} N_L, & if\ N \leq N_L, \\ N_L, N_L + 1, \cdots, N, & if\ N_L < N < N_H, \\ N_L, N_L + 1, \cdots, N_H, & if\ N \geq N_H \end{cases} \tag{11}$$

The $N_L$ and $N_H$ are predetermined minimum and maximum number of channel coefficents derived from channel operating conditions and/or performance requirements. In our implementation, the maximum and minimum values 3 and 5 are chosen to comply with GSM standards and performance criteria. This means that if $N \leq 3$, a search for a set of three coefficients/taps is performed over the set *C(j)*; if *N = 4,* 3 taps and *4* taps searches are performed over the set *C(j)*; if $N \geq 5$, then *3* taps, *4* taps and *5* taps searches are performed over the set *C(j)*. The search criterion is minimum mean squared error (MMSE) between the received midamble symbols (i.e. the centre 16 bits of the training sequence) and the reconstructed midamble symbols using the estimated channel coefficients as follows:

$$J(N_{cir}, k) = \frac{1}{16} \sum_{i=0}^{15} \left| r(\tau + 5 + i + k) - \sum_{m=0}^{N_{cir}-1} C(k+m) ts(i+5-m) \right|^2 \tag{12}$$
$$N_{cir} = N_L, N_L + 1, \cdots, N_H, 0 \leq k \leq 2R$$

The search is performed for various sets of coefficients as well as various possible values of time of arrival *k*. Let the pair $(N_{min}, k_{min})$, $3 \leq N_{min} \leq 5, 0 \leq k_{min} \leq 2R$, minimise $J(N_{cir}, k)$ in (12), then the set of channel coefficients $C(k+k_{min})$, $0 \leq k < N_{min}$, is selected as the output of channel estimator. This method intends to estimate the number $N_{cir}$ of taps and time of arrival *k* at the same time.

This technique can be made adaptive to different channel types. For example, according to GSM standard on propagation models, for rural area (RA) channel conditions, the maximum delay is about 0.5 μs, which is shorter than 1 symbol duration (48/13 μs), if GMSK modulation is taken into account (about 2-3 symbols delay), 3 channel coefficients should be a good selection; for long delay hilly terrain (HT) channel conditions, the maximum delay is about 17.2 μs, which is about 5 symbols duration, 5 channel coefficients should be a good selection. This dynamic tap search method can cope with different channel conditions, i.e. short delay channel or long delay channel.

However, as far as processing cost based on equation (12) is concerned, a lot of cycles are needed to reconstruct the midamble sequence. The complexity can be significantly reduced by simplifying equation (12) as follows:

$$J(N_{cir}, k) = \frac{1}{16} \left( \sum_{i=0}^{15} |r(\tau + 5 + i + k)|^2 - \sum_{j=0}^{N_{cir}-1} |C_{j+k}|^2 - \Delta_k \right) \tag{13}$$

where $\Delta_k$ can be calculated according to the following equation:

$$\Delta_k = 2\operatorname{Re}\left(\sum_{m=0}^{N_{cir}-1} C_{m+k} P(m+5k)\right), 0 \leq k < 2R+1 \tag{14}$$

where $Re(X)$ means real part of complex value $X$ and $P_{m+5k}$ is computed as follows:

$$P_{m+5k} = \begin{cases} 0, & m = 0, \\ \sum_{j=0}^{m-1}\left[r^*(\tau' + j + k)ts(j+5-m) - r^*(\tau' + j + k + 16)ts(j+5+16-m)\right] & 1 \leq m \leq 4, \end{cases}$$

$$\tag{15}$$

where superscript * means conjugate operation, $\tau' = \tau + 5 - R$.

Table 2 shows cycle requirements of equation (12) and (13) using Panasonic DSP MN1964.

Table 2 Cycle requirement comparison between equation (12) and (13).

| Equation No. | Cycle Requirement |
|---|---|
| *12* | *15700,* for 3, 4 and 5 taps full search |
| *13* | *7200,* for 3, 4 and 5 taps full search. |

It is found that a dynamic tap search method with a variable tap number gives better performance than fixed taps search and offers much improvement in terms of cycle requirement, especially using the fast method of equation 13.

**Claims**

1. A method of estimating channel impulse response in a communication system in which a known training sequence is transmitted over the channel, the method comprising:

   a) cross-correlating received symbols with the known training sequence to provide a predetermined number *W* of possible channel coefficients;
   b) determining a maximum number of channel coefficients less than *W* to be used in the estimated channel impulse response;
   c) for various possible sets of channel coefficients within the *W* coefficients obtained in step (a), each including no more than the maximum number determined in (b), calculating the mean squared error between a received signal sequence and a reconstructed symbol sequence using the set of channel coefficients; and
   d) selecting as the channel coefficients the combination of channel coefficients that produces the minimum mean squared error (MMSE).

2. A method as claimed in claim 1 in which step (c) is repeated for a range of possible values of time arrival *k*, and in which the channel time of arrival is additionally determined in step (d) from the MMSE value.

3. A method as claimed in claim 2 in which the MMSE is calculated according to the expression:

$$J(N_{cir},k) = \frac{1}{A}\sum_{i=0}^{A-1}\left| r(\tau + B + i + k) - \sum_{m=0}^{N_{cir}-1}C(k+m)ts(i+B-m)\right|^2$$

where $N_{cir}$ is the number of channel coefficients in the set,

$A$ is the number of reconstructed bits in the known sequence,
$r()$ is the received sequence
$\tau$ is the expected position of the start of the training sequence within a received block of data
$B$ is an adjustment factor related to the position of the first reconstructed training sequence within the received block of data
$C(\ )$ is the correlation
$ts(\ )$ is the known training sequence.

4. A method as claimed in claim 3, in the MMSE is calculated as follows:

$$J(N_{cir},k) = \frac{1}{A}\left(\sum_{i=0}^{A-1}\left|r(\tau + B + i + k)\right|^2 - \sum_{j=0}^{N_{cir}-1}\left|C_{j+k}\right|^2 - \Delta_k\right)$$

where:

$$\Delta_k = 2\,Re\left(\sum_{m=0}^{N_{cir}-1}C_{m+k}P_{(m+5k)}\right), 0 \le k < 2R+1$$

where $R$ denotes the shift size of the computing window used in the correlation calculation, $Re(X)$ denotes the means real part of a complex value $X$ and $P_{m+Bk}$ is computed as follows:

$$P_{m+5k} = \begin{cases} 0, & m = 0, \\ \sum_{j=0}^{m-1}\left[r^*(\tau' + j + k)ts(j+B-m) - r^*(\tau' + j + k + 16)ts(j+B+16-m)\right], & 1 \le m \le 4, \end{cases}$$

where superscript * means conjugate operation and $\tau' = \tau + B - R$.

5. A method as claimed in any preceding claim in which a maximum number of coefficients $N$ determined in step (b) is initially determined as the number of coefficients having correlation values larger than a predetermined threshold.

6. A method as claimed in claim 5 in which the initial determination is decided according to the following:

$X = \{0 \le j < W : |C(j)|^2 \ge E/\alpha\},$
$E = max|C(j)|^2, 0 \le j < W$

where $\alpha$ is an integer larger than 1, which is obtained from system simulation. The value 8 will give a good performance and convenience for simple implementation only by right shift operation rather than division operation.

**7.** A method as claimed in claim 5 or 6 in which the value $N$ is modified according to the following rules:

$$N_{cir} = \begin{cases} N_L, & \text{if } N \leq N_L, \\ N_L, N_L + 1, \cdots, N, & \text{if } N_L < N < N_H, \\ N_L, N_L + 1, \cdots, N_H, & \text{if } N \geq N_H \end{cases}$$

where: $N_{cir}$ is the possible number of channel coefficients in the possible sets of coefficients used in step (c),

$N_L$ is a predetermined minimum number of coefficients derived from channel operating conditions and/or performance requirements, and

$N_H$ is a predetermined maximum number of coefficients derived from channel operating conditions and/or performance requirements.

This means that if $N \leq N_L$, search for a set of $N_L$ is performed in claim 3; if $N_L < N < N_H$, then $N_L$, $N_L$+1, ..., $N$ taps search are performed in claim 3; if $N \geq N_H$, then $N_L$, $N_L$+1, ..., $N_H$ taps search are performed in claim 3.

Figure 1 Auto-correlation of TS0

Figure 2 Auto-correlation of the centre 16 bits of TS0

Figure 3 Correlation of TS0 with the centre 16 bits